Europäisches Patentamt

European Patent Office

Office européen des brevets

(11) Veröffentlichungsnummer: **0 040 733**
A2

(12) # EUROPÄISCHE PATENTANMELDUNG

(21) Anmeldenummer: 81103524.5

(22) Anmeldetag: 08.05.81

(51) Int. Cl.³: **H 02 K 55/04, H 02 K 9/19**

(30) Priorität: 23.05.80 DE 3019864

(43) Veröffentlichungstag der Anmeldung: 02.12.81
Patentblatt 81/48

(84) Benannte Vertragsstaaten: **CH FR GB LI**

(71) Anmelder: **KRAFTWERK UNION
AKTIENGESELLSCHAFT**, Wiesenstrasse 35,
D-4330 Mülheim (Ruhr) (DE)

(72) Erfinder: **Weghaupt, Erich, Rathenaustrasse 10,
D-4330 Mülheim (Ruhr) (DE)**

(74) Vertreter: **Mehl, Ernst, Dipl.-Ing. et al, Postfach 22 01 76,
D-8000 München 22 (DE)**

(54) **Generatorläufer, insbesondere Turbogeneratorläufer, mit supraleitender Erregerwicklung.**

(57) Die Erfindung bezieht sich auf einen Generatorläufer mit einer supraleitenden Erregerwicklung und zwei konzentrischen, einen Hochvakuumraum einschliessenden Läuferteilen, wobei auf der Nichtantriebseite ein Hohlzapfen (1) des äusseren Läuferteils in einem ersten Lager und ein durch den Hohlzapfen (1) hindurchgeführter Lagerzapfen (3) des inneren Läuferteils in einem zweiten Lager separat gelagert sind und wobei zwischen dem Hohlzapfen (1) und dem Lagerzapfen (3) eine Hochvakuumabdichtung angeordnet ist. Zur Schaffung einer den hohen statischen und dynamischen Beanspruchungen gerecht werdenden Hochvakuumabdichtung ist erfindungsgemäss vorgesehen, dass die Hochvakuumabdichtung als berührungslose Flüssigkeitsdichtung ausgebildet ist, deren magnetische Sperrflüssigkeit durch ein Magnetfeld im Dichtungsspalt (S) gehalten ist und dass die Flüssigkeitsdichtung an ein mitrotierendes Sperrflüssigkeitsreservoir angeschlossen ist.

KRAFTWERK UNION AKTIENGESELLSCHAFT    Unser Zeichen
Mülheim a. d. Ruhr                    VPA 80 P 9455 E

0040733

Generatorläufer, insbesondere Turbogeneratorläufer, mit
supraleitender Erregerwicklung

Die Erfindung bezieht sich auf einen Generatorläufer,
insbesondere Turbogeneratorläufer, mit supraleitender
Erregerwicklung und zwei konzentrischen, einen Hochvakuumraum einschließenden Läuferteilen, wobei auf der
Nichtantriebseite ein Hohlzapfen des äußeren Läuferteils in einem ersten Lager und ein durch den Hohlzapfen hindurchgeführter Lagerzapfen des inneren Läuferteils in einem zweiten Lager separat gelagert sind und
wobei zwischen dem Hohlzapfen und dem Lagerzapfen eine
Hochvakuumabdichtung angeordnet ist.

Ein ähnlicher Generatorläufer, bei welchem allerdings
der Hohlzapfen des äußeren Läuferteils und der Lagerzapfen des inneren Läuferteils nicht separat, sondern
in einer gemeinsamen Lagerschale gelagert sind, ist
aus der CH-PS 552 907 bereits bekannt. Zur Abdichtung
des Hochvakuumraums gegen die äußere Atmosphäre ist bei
dem bekannten Generatorläufer ein Dichtungsbalg vorgesehen, welcher zwischen dem Innenumfang des Hohlzapfens und dem Außenumfang des Lagerzapfens angeordnet
ist. Dieser Dichtungsbalg ist jedoch nur sehr schwer
zugänglich, wobei insbesondere zu seiner Inspektion und
Wartung jedesmal das Doppellager ausgebaut werden muß.

In der älteren deutschen Patentanmeldung P 29 18 763.1
wurde ein Generatorläufer der eingangs genannten Art
vorgeschlagen, bei welchem der Hohlzapfen des äußeren
Läuferteils und der Lagerzapfen des inneren Läuferteils
separat gelagert sind, wobei die Hochvakuumabdichtung
zwischen den beiden Lagern angeordnet ist. Durch diese

Klk 2 Fl/24.3.1980

Aufteilung in zwei separate Lager wird eine gute Zugänglichkeit der Hochvakuumabdichtung ermöglicht, so
daß für ihre Inspektion und Wartung eine Lagerdemontage
nicht mehr erforderlich ist.

Neben der guten Zugänglichkeit werden an die Hochvakuumabdichtungen derartiger Generatorläufer die folgenden
weiteren Forderungen gestellt:

a) Zwischen dem Warmzustand und dem Kaltzustand des Generatorläufers ergeben sich infolge thermischer Dilatation axiale Verschiebungen von beispielsweise
20 bis 25 mm, welche von der Hochvakuumabdichtung
aufgenommen werden müssen.

b) Die Hochvakuumabdichtung muß im Normalbetrieb geringe Torsionsschwingungen zwischen dem Hohlzapfen und
dem Lagerzapfen aufnehmen, wobei sich in Sonderbetriebsfällen durch Kurzschlußmomente auch im Millimeterbereich liegende tangentiale Verdrehungen ergeben können.

c) Die Hochvakuumabdichtung muß hochfrequente Radialschwingungen zwischen dem Hohlzapfen und dem Lagerzapfen aufnehmen können, deren Amplitude im Normalbetrieb beispielsweise 10 bis 20 $\mu m$ beträgt, wobei
sich diese Amplitude beim Durchfahren von Resonanzlagen auch kurzfristig erhöhen kann.

d) Die Hochvakuumabdichtung muß auch zusätzlich hochfrequente radiale Beanspruchungen aufnehmen können,
die sich durch Veränderungen in der Lagerausrichtung
in horizontaler und/oder vertikaler Richtung mit entsprechenden exzentrischen Lagen von Hohlzapfen und
Lagerzapfen ergeben können.

e) Aufgrund des aus konstruktiven Gründen relativ großen

0040733

Durchmessers der Hochvakuumabdichtung von mindestens 500 bis 600 mm muß die Hochvakuumabdichtung so beschaffen sein, daß sie die relativ hohen Eigenfliehkraftbeanspruchungen aufnehmen kann.

f) Von der Hochvakuumabdichtung wird eine hohe Standzeit und eine große Wartungsfreundlichkeit verlangt, d. h. sie muß eine ununterbrochene Betriebszeit des Generators von mindestens 20 000 bis 25 000 Stunden gewährleisten und im Revisionsfall mit geringem Montageaufwand austauschbar sein.

Diese Anforderungen an die Hochvakuumabdichtung können durch die bekannten Dichtungselemente nicht erfüllt werden. Bei den hohen statischen und dynamischen Beanspruchungen werden Dichtungselemente wie Metallbälge, Membranscheiben und dergleichen innerhalb kürzester Zeit zerstört, d. h. sie erreichen nur einen Bruchteil der geforderten Standzeiten.

Der Erfindung liegt daher die Aufgabe zugrunde, einen Generatorläufer zu schaffen, bei welchem die Hochvakuumabdichtung sämtliche vorstehend aufgeführten Forderungen erfüllt.

Diese Aufgabe wird bei einem Generatorläufer der eingangs genannten Art erfindungsgemäß dadurch gelöst, daß die Hochvakuumabdichtung als berührungslose Flüssigkeitsdichtung ausgebildet ist, deren magnetische Sperrflüssigkeit durch ein Magnetfeld im Dichtungsspalt gehalten ist und daß die Flüssigkeitsdichtung an ein mitrotierendes Sperrflüssigkeitsreservoir angeschlossen ist. Die im Dichtungsspalt durch das Magnetfeld gehaltene magentische Sperrflüssigkeit gewährleistet eine sichere Abdichtung des Hochvakuumraums gegenüber der äußeren Atmosphäre, wobei geringe Verluste der Sperrflüssigkeit durch Ver-

0040733

dunstung aus dem Sperrflüssigkeitsreservoir kompensiert werden. Dadurch, daß die Hochvakuumabdichtung als berührungslose Flüssigkeitsdichtung ausgebildet ist, haben die hohen statischen und dynamischen Beanspruchungen keine Auswirkungen auf die Funktionssicherheit der Abdichtung.

Berührungslose Flüssigkeitsdichtungen, deren magnetische Sperrflüssigkeit durch ein Magnetfeld im Dichtungsspalt gehalten ist, sind als Wellenabdichtungen bereits bekannt. Bei derartigen, auch als Ferrofluidikdichtungen bezeichneten Wellenabdichtungen wird jedoch der zwischen einem feststehenden Gehäuse und einer umlaufenden Welle befindliche Dichtungsspalt abgedichtet, d. h. der Ausgleich der Sperrflüssigkeitsverluste bereitet keinerlei Schwierigkeiten. Demgegenüber befindet sich bei dem erfindungsgemäßen Generatorläufer der Dichtungsspalt zwischen dem Hohlzapfen und dem Lagerzapfen, also zwischen zwei mit gleicher Umlauffrequenz bewegten Teilen. Die Anwendung der bekannten Ferrofluidikdichtung als Hochvakuumabdichtung eines Generatorläufers ist also nur dann realisierbar, wenn gemäß der Erfindung als weitere Maßnahme ein mitrotierendes Sperrflüssigkeitsreservoir vorgesehen ist.

Bei einer bevorzugten Ausführungsform des erfindungsgemäßen Generatorläufers ist das Sperrflüssigkeitsreservoir zumindest bereichsweise auf einem geringeren Durchmesser angeordnet als der Dichtungsspalt. Durch diese Maßnahme gestaltet sich das Nachspeisen der magnetischen Sperrflüssigkeit in den Dichtungsspalt besonders einfach, da ohne zusätzliche Pumpmittel die Pumpwirkung der Rotation ausgenutzt wird.

Vorzugsweise ist der Lagerzapfen im Bereich des Sperrflüssigkeitsreservoirs mit einem Absatz geringeren

0040733

Durchmessers versehen, wobei das Sperrflüssigkeitsreservoir diesen Absatz mit geringem Abstand ringförmig umschließt. Durch diese konstruktive Maßnahme wird zusätzlicher, der Pumpwirkung durch Rotation unterliegender Raum für das Sperrflüssigkeitsreservoir gewonnen.

Der radiale Abstand zwischen der inneren Begrenzung des Sperrflüssigkeitsreservoirs und dem Dichtungsspalt ist zweckmäßigerweise derart bemessen, daß beim Betrieb vorgegebene Grenzwerte des Zulaufdruckes der Sperrflüssigkeit im Dichtungsspalt nicht über- bzw. unterschritten werden. Die Grenzwerte des Zulaufdruckes können dann so festgelegt werden, daß einerseits die Aufgabe der Nachspeisung erfüllt wird und andererseits die Sicherheit gegen einen Dichtungsdurchbruch in den Hochvakuumraum nicht oder nicht nennenswert verringert wird.

Das auf einem geringeren Durchmesser als der Dichtungsspalt liegende Volumen des Sperrflüssigkeitsreservoirs ist zweckmäßigerweise derart bemessen, daß innerhalb eines vorgegebenen Revisionsintervalls sämtliche Sperrflüssigkeitsverluste ausgeglichen werden können. Somit kann für die gesamte Betriebszeit die selbsttätige Pumpwirkung durch Rotation ausgenutzt werden.

Das Sperrflüssigkeitsreservoir ist vorteilhaft über axiale Kanäle und daran anschließende radiale Kanäle mit dem Dichtungsspalt verbunden. Auf diese Weise kann die Verbindung von Dichtungsspalt und Sperrflüssigkeitsreservoir fliehkraftsicher und mit geringem baulichen Aufwand ausgeführt werden.

Das Sperrflüssigkeitsreservoir kann durch radiale Trennwände in mehrere Kammern unterteilt sein. Die Trennwände wirken hierbei als Mitnehmer für die Sperrflüssigkeit und verhindern hierdurch einen Schlupf zwischen

0040733

der Sperrflüssigkeit und der Wandung des Sperrflüssigkeitsreservoirs.

Bei einer weiteren Ausgestaltung des erfindungsgemäßen
Generatorläufers ist vorgesehen, daß in das Sperrflüssigkeitsreservoir mindestens ein von außen zugänglicher
und verschließbarer Einfüllkanal einmündet. Durch diese
Maßnahme kann das Sperrflüssigkeitsreservoir bei einer
Revision besonders einfach wieder aufgefüllt werden.

Anhand einer vereinfachten schematischen Zeichnung sind
Aufbau und Wirkungsweise eines Ausführungsbeispiels
nach der Erfindung näher erläutert. Dabei zeigen:

Fig. 1 einen Längsschnitt durch einen aus zwei konzentrischen Läuferteilen bestehenden Turbogeneratorläufer
im Bereich der Lagerung auf der Nichtantriebseite,

Fig. 2 die nach Fig. 1 im Bereich der Lagerung angeordnete Hochvakuumabdichtung im Detail und

Fig. 3 einen Querschnitt durch die Hochvakuumabdichtung
gemäß der Linie III-III der Fig. 2.

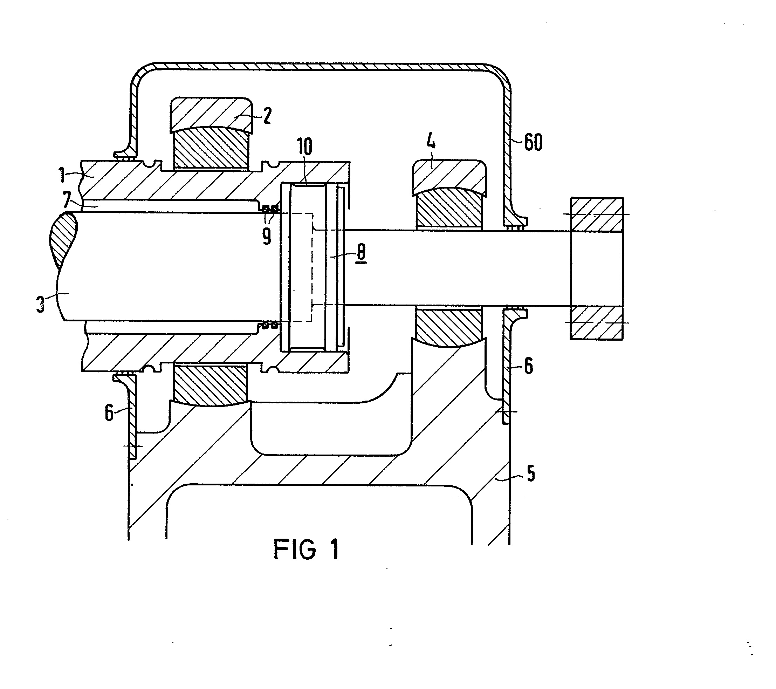

Ein Turbogeneratorläufer mit supraleitender Erregerwicklung und zwei konzentrischen, einen Hochvakuumraum einschließenden Läuferteilen ist auf der Nichtantriebseite gemäß Fig. 1 mittels eines Hohlzapfens 1
des äußeren Läuferteils in einem ersten Lager 2 und
mittels eines durch den Hohlzapfen 1 hindurchgeführten
Lagerzapfens 3 des inneren Läuferteils in einem zweiten
Lager 4 gelagert. Die beiden separaten Lager 2 und 4
sind bei dem dargestellten Ausführungsbeispiel in einem
gemeinsamen Lagerbock 5 angeordnet und nach dem Abnehmen
des oberen Teils 60 eines mehrteiligen Lagergehäuses 6
von außen her zugänglich. Zwischen dem Innenumfang des
Hohlzapfens 1 und dem Außenumfang des Lagerzapfens 2 befindet sich ein Ringraum 7, welcher mit dem Hochvakuumraum des Turbogeneratorläufers unmittelbar verbunden und gegen die äußere Atmosphäre durch eine insgesamt mit 8 bezeichnete Hochvakuumabdichtung abgedichtet ist. Damit bei ausgebauter Hochvakuumabdichtung
8 keine Fremdpartikel in den Hochvakuumraum gelangen
können, sind zwischen dem Hohlzapfen 1 und dem Lagerzapfen 3 zusätzlich noch Dichtungsringe 9 angeordnet.
Diese Dichtungsringe 9 dienen also lediglich zur Grobabdichtung, d. h. sie sind nicht dazu geeignet, die Aufgabe der Hochvakuumabdichtung 8 zu übernehmen.

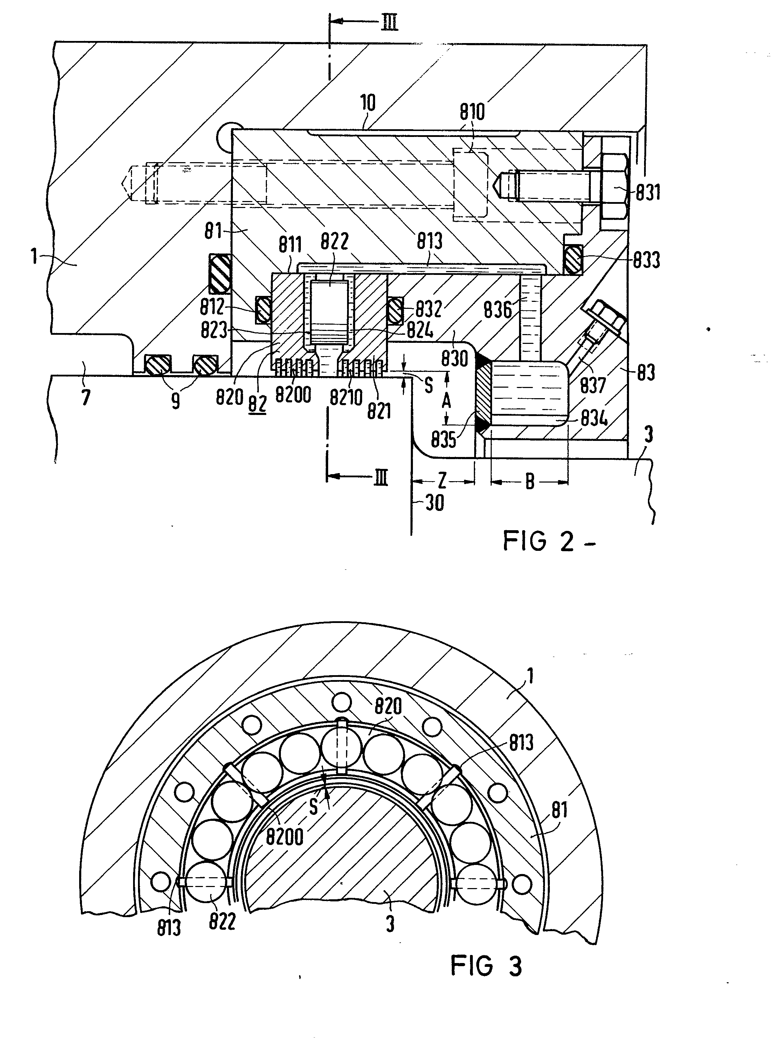

Zur weiteren Erläuterung des Aufbaues und der Wirkungsweise der Hochvakuumabdichtung 8 wird auf die Fig. 2
und 3 verwiesen. Zur Aufnahme des Dichtungsgehäuses 81
der Hochvakuumabdichtung 8 ist am freien Ende des Hohlzapfens 1 eine Ausdrehung 10 vorgesehen, wobei das
Dichtungsgehäuse 81 mit spielfreiem Paßsitz in diese
Ausdrehung 10 eingesetzt und mittels mehrerer über den
Umfang verteilter Axialschrauben 810 gehalten ist. Zur
Aufnahme des eigentlichen Dichtungsmoduls 82 ist das
Dichtungsgehäuse 81 mit einer Ausdrehung 811 versehen.
Die Festlegung des Dichtungsmoduls 82 in axialer Richtung erfolgt durch den in die Ausnehmung 811 vorspringenden Bund 830 eines Stirndeckels 83, welcher mit Hilfe von mehreren über den Umfang verteilt angeordneten
Schrauben 831 am Dichtungsgehäuse 81 befestigt ist.
Hierbei ist zwischen den einander zugewandten Stirnseiten der Ausdrehung 811 und des Dichtungsmoduls 82
ein Dichtungsring 812, zwischen den einander zugewandten
Stirnseiten des Bundes 830 und des Dichtungsmoduls 82
ein Dichtungsring 832 und zwischen den Anlageflächen
des Stirndeckels 83 und des Dichtungsgehäuses 81 ein
Dichtungsring 833 angeordnet.

Neben der axialen Festlegung des Dichtungsmoduls 82 hat der Stirndeckel 83 auch die Aufgabe, ein Sperrflüssigkeitsreservoir 834 aufzunehmen. Dieses Sperrflüssigkeitsreservoir 834, welches einen Absatz 30 geringeren Durchmessers des Lagerzapfens 3 ringförmig umschließt, ist als konzentrische Ausnehmung in den Stirndeckel 83 eingebracht und mittels einer eingeschweißten Stirnplatte 835 flüssigkeitsdicht verschlossen. Die Verbindung des Sperrflüssigkeitsreservoirs 834 mit dem Dichtungsmodul 82 erfolgt durch mehrere in den Stirndeckel 83 eingebrachte radiale Kanäle 836, an welche sich als Nuten in den Innenumfang der Ausdrehung 811 eingeschnittene axiale Kanäle 813 anschließen. In das Sperrflüssigkeitsreservoir mündet ferner ein von außen zugänglicher Einfüllkanal 837 ein, welcher durch einen Gewindestopfen 838 flüssigkeitsdicht verschließbar ist.

Der Dichtungsmodul 82 besteht aus den Lagerzapfen 3 ringförmig umschließenden Polschuhen 820 und 821, welche an ihrem Innenumfang mit Dichtungskämmen 8200 bzw. 8210 versehen sind. Diese Dichtungskämme 8200 und 8210 bilden zum Lagerzapfen 3 hin einen mit S bezeichneten Dichtungsspalt, welcher so bemessen ist, daß sich keine metallische Berührung ergibt. Zwischen den beiden Polschuhen 820 und 821 sind über den Umfang gleichmäßig verteilte, scheibenförmige Permanentmagnete 822 angeordnet, die auch bezüglich ihrer Polung jeweils gleich ausgerichtet sind. Die Verbindung zwischen den axialen Kanälen 813 und dem Dichtungsspalt S erfolgt über radiale Kanäle 823 und 824, welche in die Polschuhe 820 bzw. 821 eingebracht sind und zwischen den beiden Polschuhen 820 und 821 gemeinsam in den Dichtungsspalt S einmünden.

Vor Inbetriebnahme des Turbogenerators wird das Sperrflüssigkeitsreservoir 834 über den Einfüllkanal 837 mit einer magnetischen Sperrflüssigkeit aufgefüllt. Bei derartigen magnetischen Sperrflüssigkeiten handelt es sich um kolloidale Suspensionen von magnetischen Partikeln

0040733

in einer Trägerflüssigkeit. Im Hinblick auf das abzu-dichtende Hochvakuum sind als Trägerflüssigkeit insbe-sondere Flüssigkeiten mit einem niedrigen Dampfdruck, beispielsweise auf der Basis von Diestern, geeignet.

Durch den mit A bezeichneten radialen Abstand zwischen der inneren Begrenzung des Sperrflüssigkeitsreservoirs 834 und dem Innenumfang der Dichtungskämme 8200 und 8210 wird die magnetische Sperrflüssigkeit beim Betrieb durch die Fliehkraftwirkung selbsttätig in den Dichtungsspalt S gefördert. Über das von den Permanentmagneten 822 aufgebaute magnetische Feld und durch die fokussierende Wirkung der Spitzen der Dichtungskämme 8200 und 8210 wird die magnetische Sperrflüssigkeit dann im Dichtungsspalt S festgehalten, so daß der mit dem Hochvakuumraum in Verbindung stehende Ringraum 7 gegen die äußere Atmosphäre sicher abgedichtet wird. Da im Dichtungsspalt S keine Reibungsverluste durch Rotation entstehen, sind die Sperrflüssigkeitsverluste äußerst gering. Die durch Verdunstung und durch Benetzungen des Lagerzapfens 3 bei Axialbewegungen entstehenden Sperrflüssigkeitsverluste werden durch Nachschub aus dem radial tiefer liegenden Sperrflüssigkeitsreservoir 834 ausgeglichen. Der bereits erwähnte radiale Abstand A wird hierbei so bemessen, daß einerseits die Aufgabe der Nachspeisung der Sperrflüssigkeit erfüllt wird und andererseits die Sicherheit gegen einen Dichtungsdurchbruch in den Hochvakuumraum nicht nennenswert verringert wird. Das durch den radialen Abstand A, die axiale Breite B und den Durchmesser des Absatzes 30 des Lagerzapfens 3 festgelegte Volumen des Sperrflüssigkeitsreservoirs 834 ist so bemessen, daß innerhalb eines vorge-gebenen Revisionsintervalls sämtliche Sperrflüssigkeits-verluste ausgeglichen werden können. Bei der konstruktiven Auslegung der Hochvakuumabdichtung 8 ist ferner darauf zu achten, daß der mit Z bezeichnete axiale Abstand zwischen dem Absatz 30 des Lagerzapfens 3 und der Stirnplatte 835 des Sperrflüssigkeitsreservoirs 834
größer ausgeführt werden muß, als die axiale Verschiebund durch thermische Dilatation.

3 Fig.
8 Patentansprüche

Patentansprüche

1. Generatorläufer, insbesondere Turbogeneratorläufer, mit supraleitender Erregerwicklung und zwei konzentrischen, einen Hochvakuumraum einschließenden Läuferteilen, wobei auf der Nichtantriebseite ein Hohlzapfen des äußeren Läuferteils in einem ersten Lager und ein durch den Hohlzapfen hindurchgeführter Lagerzapfen des inneren Läuferteils in einem zweiten Lager separat gelagert sind und wobei zwischen dem Hohlzapfen und dem Lagerzapfen eine Hochvakuumabdichtung angeordnet ist, d a d u r c h   g e k e n n z e i c h n e t, daß die Hochvakuumabdichtung (8) als berührungslose Flüssigkeitsdichtung ausgebildet ist, deren magnetische Sperrflüssigkeit durch ein Magnetfeld im Dichtungsspalt (S) gehalten ist und daß die Flüssigkeitsdichtungen an ein mitrotierendes Sperrflüssigkeitsreservoir (834) angeschlossen ist.

2. Generatorläufer nach Anspruch 1, d a d u r c h   g e k e n n z e i c h n e t, daß das Sperrflüssigkeitsreservoir (834) zumindest bereichsweise auf einem geringeren Durchmesser angeordnet ist als der Dichtungsspalt (S).

3. Generatorläufer nach Anspruch 1 oder 2, d a d u r c h   g e k e n n z e i c h n e t, daß der Lagerzapfen (3) im Bereich des Sperrflüssigkeitsreservoirs (834) mit einem Absatz (30) geringeren Durchmessers versehen ist und daß das Sperrflüssigkeitsreservoir (834) diesen Absatz (30) mit geringem Abstand ringförmig umschließt.

4. Generatorläufer nach Anspruch 2 oder 3, d a d u r c h   g e k e n n z e i c h n e t, daß der radiale Abstand (A) zwischen der inneren Begrenzung des Sperrflüssigkeitsreservoirs (834) und dem Dichtungsspalt (S) derart bemessen ist, daß beim Betrieb vorgegebene Grenzwerte

0040733

des Zulaufdruckes der Sperrflüssigkeit im Dichtungsspalt (S) nicht über- bzw. unterschritten werden.

5. Generatorläufer nach Anspruch 2, 3 oder 4, d a -
d u r c h   g e k e n n z e i c h n e t, daß das auf
einem geringeren Durchmesser als der Dichtungsspalt (S)
liegende Volumen des Sperrflüssigkeitsreservoirs (834)
derart bemessen ist, daß innerhalb eines vorgegebenen Revisionsintervalls sämtliche Sperrflüssigkeitsverluste
ausgeglichen werden können.

6. Generatorläufer nach einem der vorhergehenden Ansprüche, d a d u r c h   g e k e n n z e i c h n e t,
daß das Sperrflüssigkeitsreservoir (834) über axiale
Kanäle (813) und daran anschließende radiale Kanäle
(823, 824) mit dem Dichtungsspalt (S) verbunden ist.

7. Generatorläufer nach einem der vorhergehenden Ansprüche, d a d u r c h   g e k e n n z e i c h n e t
daß das Sperrflüssigkeitsreservoir (834) durch radiale
Trennwände in mehrere Kammern unterteilt ist.

8. Generatorläufer nach einem der vorhergehenden Ansprüche, d a d u r c h   g e k e n n z e i c h n e t,
daß in das Sperrflüssigkeitsreservoir (834) mindestens
ein von außen zugänglicher und verschließbarer Einfüllkanal (837) einmündet.

FIG 1

FIG 2 -

FIG 3